# EUROPÄISCHE PATENTSCHRIFT

(11) **EP 2 707 612 B1**
(45) Veröffentlichungstag und Bekanntmachung des Hinweises auf die Patenterteilung: **28.06.2017**
(21) Anmeldenummer: 12717252.6
(22) Anmeldetag: 17.04.2012
(51) Int. Cl.: F16C 27/04, F16C 39/02, F16C 32/04, F16C 35/077, F16C 19/16, F16C 19/54, F16C 19/10

(54) **LAGERANORDNUNG MIT EINEM FANGLAGER, INSBESONDERE FÜR EINE LAGERUNG EINER SCHNELLDREHENDEN WELLE**
BEARING ARRANGEMENT WITH A BACK-UP BEARING, IN PARTICULAR FOR SUPPORTING A RAPIDLY ROTATING SHAFT
ENSEMBLE PALIER COMPORTANT UN PALIER DE RETENUE, EN PARTICULIER POUR SUPPORTER UN ARBRE TOURNANT À GRANDE VITESSE

(30) Priorität: 12.05.2011 DE 102011075710
(43) Veröffentlichungstag der Anmeldung: 19.03.2014
(73) Patentinhaber: Schaeffler Technologies AG & Co. KG, 91074 Herzogenaurach (DE)
(72) Erfinder: SIEBKE, Peter, 91058 Erlangen (DE); PAUSCH, Michael, 97456 Dittelbrunn (DE); BAUER, Jörg, 91056 Erlangen (DE); DUDZIAK, Mark, 91074 Herzogenaurach (DE); BENDER, Armin, 91074 Herzogenaurach (DE); RUHL, Stefan, 91056 Erlangen (DE)
(86) Internationale Anmeldenummer: PCT/EP2012/056956
(87) Internationale Veröffentlichungsnummer: WO 2012/152541

(56) Entgegenhaltungen:
- EP-A1- 1 083 349
- JP-A- 11 082 522
- US-A- 4 628 522
- US-A- 5 531 522
- US-B1- 6 661 143

## Beschreibung

### Gebiet der Erfindung

Die Erfindung betrifft eine Lageranordnung mit einem Fanglager, insbesondere als Bestandteil der Lagerung einer schnelldrehenden Welle.

Aus der Praxis sind Lagerungen bekannt, bei denen eine Welle drehbar in beispielsweise Magnetlagern gelagert ist. Die Lagerung umfasst eine Lageranordnung mit einem Fanglager, wobei das mindestens eine Fanglager die Welle aufnimmt, falls das Magnetlager ausfällt. Im normalen Betrieb des mindestens einen Magnetlagers ist zwischen der Mantelfläche der Welle und einer auf die Welle weisenden Mantelfläche des inneren Lagerrings des Fanglagers ein Fanglagerspalt ausgebildet.

Problematisch ist die Aufnahme sehr schnelldrehender Wellen mit hohem Gewicht. Hierbei treten sehr hohe Kräfte und Momente auf, die das Fanglager beschädigen können. Weiter fällt die Welle bezogen auf die Drehachse im normalen Betrieb der Magnetlager exzentrisch in das Fanglager, das somit eine am Umfang ungleichmäßig auftretende Stoßbelastung erfährt.

EP 1 083 349 A1 offenbart eine Lageranordnung nach dem Oberbegriff des Anspruchs 1. Dieses Dokument zeigt ein Magnetlager mit einem Fanglager. Das Fanglager umfasst zwei Kugellager und zwei gewellte, plattenförmige Dämpfungselemente, die in einem ringförmigen Spalt eingesetzt sind, der zwischen dem Fanglager und seinem Halterungselement ausgebildet ist.

### Aufgabe der Erfindung

Es ist die Aufgabe der Erfindung, eine Lageranordnung mit einem Fanglager für eine Welle anzugeben, die insbesondere die bei der Aufnahme von schnelldrehenden Wellen auftretenden Kräfte besser aufnehmen kann.

### Zusammenfassung der Erfindung

Diese Aufgabe wird erfindungsgemäß gelöst durch eine Lageranordnung gemäß Anspruch 1. Aufgrund der kräftemäßigen Freistellung des Wälzlagers in radialer Richtung nimmt das Wälzlager bevorzugt Kräfte in axialer Richtung auf, deren zentrierende Wirkung auf die in das Fanglager fallende Wirkung ausgenutzt werden kann. Das Wälzlager wirkt in radialer Richtung im wesentlichen als Loslager. Das Wälzlager ist jedoch in die Umgebungskonstruktion fest eingebunden und nicht etwa schwimmend, in axialer Richtung als Ganzes verschieblich, gelagert.

Vorzugsweise ist vorgesehen, dass eine Lageraufnahme vorgesehen ist, an der der Außenring des Wälzlagers angeordnet ist, wobei die Lageraufnahme eine umlaufende Materialschwächung, insbesondere umlaufende Nuten, aufweist. Die umlaufende Materialschwächung reduziert die Aufnahme von Kräften in axialer Richtung nur wenig, bewirkt jedoch eine gezielt eingebrachte Nachgiebigkeit in radialer Richtung.

Vorzugsweise ist vorgesehen, dass ein von dem Außenring begrenzter Wellbandspalt radial vergrößert ausgebildet ist. Der Wellbandspalt wird zu einer Seite durch die Mantelfläche des Außenrings und zu einer anderen Seite durch eine Fläche entweder eines Gehäuses oder einer Lageraufnahme, die zwischen dem Wälzlager und dem Gehäuse angeordnet ist, ausgebildet. Die radiale Ausprägung, speziell die radiale Erstreckung, des Wellbandspaltes kann beispielsweise gezielt verdoppelt oder vervielfacht sein. Aufgrund der deutlich vergrößerten Ausbildung des Wellbandspaltes weicht das als Fanglager vorgesehene Wälzlager in radialer Richtung stärker aus, wenn die Welle in das Fanglager fällt, und gibt Kräfte weniger in radialer als bevorzugt in axialer Richtung weiter. Dies gilt sowohl für den Fall, dass in dem Wellbandspalt ein Wellband angeordnet ist, wie auch für den Fall, dass kein Wellband in dem Wellbandspalt vorgesehen ist, der Wellbandspalt also freibleibt.

Vorzugsweise ist vorgesehen, dass ein Wellband (12) mit reduzierter Steifigkeit in dem Wellbandspalt angeordnet ist. Aufgrund der reduzierten Steifigkeit ist das Wellband gegenüber radial auftretenden Kräften sehr nachgiebig, so dass das Fanglager axiale Kräfte stärker als radiale Kräfte aufnimmt.

Vorzugsweise ist vorgesehen, dass der Außenring des Wälzlagers an einem ersten Teil einer Lageraufnahme befestigt ist, wobei ein zweiter Teil der Lageraufnahme zwischen dem ersten Teil der Lageraufnahme und dem Gehäuse angeordnet ist, und wobei die beiden Teile der Lageraufnahme in radialer Richtung federnd aneinander abgestützt sind. Die Lageraufnahme ist ein zwischen das Fanglager und das ortsfeste Gehäuse angeordnetes Bauteil, das in radialer Richtung zweigeteilt ausgebildet ist, wobei die beiden Teile, also der bezogen auf die Drehachse der Welle radial innenliegende, erste Teil und der radial außenliegende zweite Teil federnd aneinander abgestützt sind. Das Federmittel zwischen den beiden Teilen der Lageraufnahme nimmt dabei vor allem Verschiebungen in radialer Richtung auf, so dass das Fanglager die Kräfte insbesondere in axialer Richtung aufnehmen und weiterleiten kann.

Erfindungsgemäß ist vorgesehen, dass der Innenring des Wälzlagers mit der Welle ein erstes Reibflächenpaar und der Außenring des Wälzlagers mindestens mittelbar ein zweites Reibflächenpaar ausbildet, wobei die Reibeigenschaften der beiden Reibflächenpaare für eine reibgesteuerte Selbstzentrierung des Innenrings des Wälzlagers bezogen auf die Welle eingestellt sind.

Hinsichtlich der Ausbildung der beiden Reibflächenpaare ist vorzugsweise vorgesehen, dass die Reibung eines der Reibflächenpaare durch Beschichtungen, Beläge, Oberflächenrauhigkeiten bzw. Oberflächenstrukturierungen gegenüber den Reibeigenschaften des anderen Reibflächenpaars erhöht ist.

Hinsichtlich der Ausbildung der beiden Reibflächenpaare ist vorzugsweise weiter vorgesehen, dass die Reibung des anderen Reibflächenpaars durch Beschichtungen oder verminderte Oberflächenrauhigkeiten herabgesetzt ist.

Vorzugsweise ist vorgesehen, dass eine Stirnfläche des Innenrings des Wälzlagers mit einer radial abgestellten Bordfläche an der Welle zusammenwirkt. Im Bereich der Stirnfläche werden insbesondere axiale Kräfte in das Wälzlager eingeleitet. Die Bordfläche und die Stirnfläche bilden ein Führungsflächenpaar aus, das zur Zentrierung des Innenrings durch die in das Fanglager einfallende Welle ausgenutzt werden kann. Insbesondere können die Stirnfläche und die Bordfläche ein erstes Reibflächenpaar ausbilden, dessen Reibeigenschaften gezielt eingestellt werden können, um eine reibungsgesteuerte Zentrierung des Innenrings relativ zu der einfallenden Welle zu erleichtern. Das ist insbesondere auch dann möglich, wenn sowohl die Stirnfläche des Innenrings als auch die Bordfläche an der Welle im wesentlichen radial, also unter einem Winkel von annähernd ca. 90°, zu der Drehachse der Welle ausgerichtet sind.

Vorzugsweise ist hinsichtlich der Bordfläche und der Stirnfläche vorgesehen, dass die Bordfläche und die Stirnfläche mindestens abschnittsweise angeschrägt ausgebildet sind und ein Führungsflächenpaar ausbilden. Aufgrund der angeschrägten Ausbildung wird die zentrierte Ausrichtung des Innenrings bezüglich der einfallenden Welle unterstützt.

Vorzugsweise ist hinsichtlich der Bordfläche und der Stirnfläche vorgesehen, dass die Bordfläche und die Stirnfläche einen Winkel, bezogen auf die Drehachse der Welle, insbesondere einen hohen Winkel bezogen auf die Drehachse einschließen.

Alternativ ist vorzugsweise vorgesehen, dass die Bordfläche abschnittsweise einen Winkel zu der Drehachse einschließt, und wobei die Stirnfläche einen abgerundeten Abschnitt aufweist, der mit dem angeschrägten Abschnitt der Bordfläche zusammenwirkt. Die Stirnfläche des Innenrings ist abschnittsweise beispielsweise torusballig ausgebildet, wobei der torusballige Abschnitt mit den angeschrägten Abschnitt der Bordfläche zusammenwirkt.

Vorzugsweise ist vorgesehen, dass ein Federelement zwischen der Bordfläche und der Stirnfläche angeordnet ist. Das Federelement wird gespannt, wenn die Welle mit der Bordfläche in das Wälzlager auf eine Fläche des Innenrings fällt und unterstützt die Ausrichtung des Innenrings bezogen auf die einfallende Welle. Zur Aufnahme des Federelementes kann der Innenring einen Winkel bezogen auf die Drehachse der Welle aufweisen, beispielsweise einen Winkel von 45°, und die Bordfläche im wesentlichen senkrecht zu der Drehachse der Welle abstehen, so dass ein umlaufender Aufnahmeraum für das Federelement bereitgestellt wird.

Alternativ zu einem Schrägrollenlager, das sowohl axiale als auch radiale Kräfte aufnehmen kann, ist vorzugsweise vorgesehen, dass das Wälzlager als im wesentlichen axial wirkendes Lager ausgebildet ist, wobei eine Umschlingung der Laufbahnen der Wälzkörper an dem einen Lagerring des Wälzlagers größer ist als an dem anderen Lagerring des Wälzlagers. Hierbei ist vorgesehen, dass das Wälzlager als im wesentlichen axial wirkendes Lager ausgebildet ist, wobei eine radiale Einstellung im Wälzkontakt stattfindet. Bei den hohen Drehzahlen, die auftreten, wenn die Welle in dem Fanglager aufgenommen wird, stellt die Umschlingung an dem ersten Lagerring sicher, dass die Wälzkörper in dem Wälzlager gehalten werden. Der andere Lagerring kann in diesem Fall im wesentlichen eben ausgebildet sein.

Die Erfindung schließt auch die Verwendung eines Axiallagers ein, das Kräfte im wesentlichen nur in axialer Richtung aufnehmen kann, zur axialen Kraftübertragung auf das Fanglager. Das Axiallager kann beispielsweise ein Axial-Zylinderrollenlager sein. Die Erfindung betrifft ebenfalls die Verwendung eines Axiallagers, das Kräfte nur in axialer Richtung aufnehmen kann, als axiales Fanglager.

Weitere Vorteile und Merkmale ergeben sich aus den abhängigen Ansprüchen sowie aus der folgenden Beschreibung von bevorzugten Ausführungsbeispielen der Erfindung.

Die Erfindung wird im folgenden unter Bezugnahme auf die anliegenden Zeichnungen näher beschrieben und erläutert.

### Kurze Beschreibung der Zeichnungen

- Fig. 1: zeigt schematisch einen Querschnitt durch ein erstes Ausführungsbeispiel einer Lageraufnahme als Teil einer Lageranordnung,
- Fig. 2: zeigt schematisch einen Querschnitt durch ein zweites Ausführungsbeispiel einer Lageranordnung, wobei rechts unten das Detail ,X' vergrößert dargestellt ist,
- Fig. 3: zeigt einen ausschnittsweisen Querschnitt durch ein drittes Ausführungsbeispiel einer Lageranordnung,
- Fig. 4: zeigt einen ausschnittsweisen Querschnitt durch ein viertes Ausführungsbeispiel einer Lageranordnung,
- Fig. 5: zeigt ausschnittsweise einen Querschnitt durch ein fünftes Ausführungsbeispiel einer erfindungsgemäßen Lageranordnung,
- Fig. 6: zeigt ausschnittsweise einen Querschnitt durch ein sechstes Ausführungsbeispiel einer erfindungsgemäßen Lageranordnung,
- Fig.: 7 zeigt ausschnittsweise einen Querschnitt durch ein siebtes Ausführungsbeispiel einer Lageranordnung, und
- Fig. 8: zeigt ausschnittsweise einen Querschnitt durch ein achtes Ausführungsbeispiel einer Lageranordnung.

### Detaillierte Beschreibung der Zeichnung

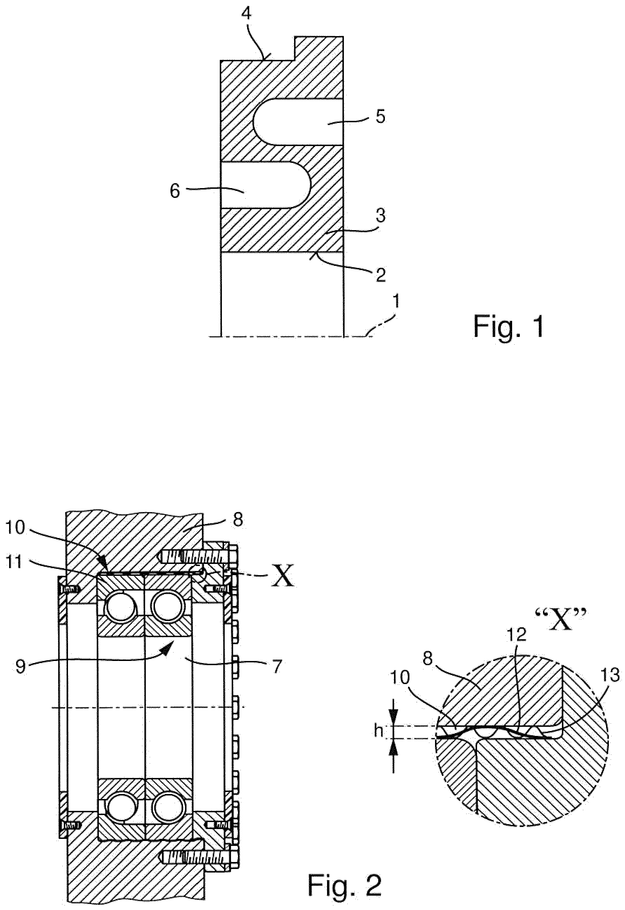

Fig. 1 zeigt eine Lageranordnung, bei der eine Welle um eine Drehachse 1 drehbar mittels Magnetlagern gelagert wird. Die Lageranordnung umfasst mindestens ein Fanglager, das als Wälzlager, speziell aus zweireihiges Schrägkugellager, ausgebildet ist und Kräfte sowohl in axialer als auch in radialer Richtung aufnehmen kann. Ein Außenring des Wälzlagers ist an einer auf die Drehachse 1 weisenden Innenfläche 2 einer Lageraufnahme 3 angeordnet. Die Lageraufnahme 3 ist mit einer Außenfläche 4 an einer Anschlusskonstruktion an einer Anschlusskonstruktion, beispielsweise an einem ortsfesten Gehäuse, angeordnet. Ein Innenring des Wälzlagers ist durch einen Fanglagerspalt von der Mantelfläche der Welle beabstandet, so lange die Welle in den Magnetlagern gelagert ist.

Die Lageranordnung ist Teil der Lagerung einer schnell laufenden Welle. Fällt das Magnetlager aus, fällt die Welle in das Fanglager.

Das Wälzlager ist in radialer Richtung im wesentlichen freigestellt, kann also Kräfte insbesondere in axialer Richtung, dagegen in radialer Richtung nur beschränkt aufnehmen und an die Umgebungskonstruktion, beispielsweise das Gehäuse, weiterleiten. Das Wälzlager ist damit in axialer Richtung steif und in radialer Richtung, senkrecht zu der Erstreckung der Drehachse 1 der Welle, nachgiebig ausgestaltet und in radialer Richtung somit kräftemäßig freigestellt.

Um das Wälzlager in radialer Richtung im wesentlichen freigestellt anzuordnen, ist vorgesehen, dass die Lageraufnahme 3, an der der Außenring des Wälzlagers angeordnet ist, eine die Drehachse 1 umlaufende Materialschwächung, beispielsweise zwei umlaufende Nuten 5, 6, aufweist. Die erste Nut 5 an der einen Seite und die zweite Nut an der gegenüberliegenden zweiten Seite 6 der Lageraufnahme 3 sind jeweils so tief ausgeführt, so dass sich die tiefen Abschnitte der beiden Nuten 5, 6 in Blickrichtung senkrecht zu der Drehachse 1 überlappen. Die Nuten 5, 6 reduzieren die Fähigkeit der Lageraufnahme 3 zur Übertragung von axial, parallel zu der Drehachse 1 auftretenden Kräften nur gering. Die Nuten 5, 6 setzen jedoch die Übertragung radial wirkender Kräfte an das Gehäuse deutlich herab.

Die nachfolgend beschriebenen Ausführungsbeispiele beschreiben weitere Möglichkeiten, mit denen vorgesehen sein kann, dass das Wälzlager in radialer Richtung im wesentlichen freigestellt ist. Dabei bezeichnen gleiche Bezugsziffern gleich oder in ihrer technischen Wirkung vergleichbare Merkmale.

Fig. 2 zeigt eine Lageranordnung zur drehbaren Lagerung einer nicht dargestellten Welle gegenüber einem Gehäuse 8, umfassend ein Fanglager 9, das als Wälzlager ausgebildet ist, wobei das Wälzlager Kräfte in axialer und radialer Richtung aufnehmen kann und insbesondere als Schrägrollenlager, speziell als zweireihiges Schrägkugellager, ausgebildet ist. Damit das Wälzlager 9 in radialer Richtung im wesentlichen freigestellt ist, ist vorgesehen, dass ein Wellbandspalt 10 an dem Außenring 11 des Wälzlagers 9 radial vergrößert ausgebildet ist. Der Wellbandspalt 10 ist, wie das Inset in Fig. 2 vergrößert darstellt, in radialer Richtung, senkrecht zu der Drehachse 1, vergrößert und weist eine radiale Erstreckung h auf, die deutlich größer als die übliche Erstreckung ist und ein Vielfaches der üblichen Erstreckung, beispielsweise mindestens das Dreifache der üblichen Erstreckung, beträgt.

Als weitere, ergänzende Maßnahme, damit das Wälzlager 9 in radialer Richtung im wesentlichen freigestellt ist, ist vorgesehen, dass in dem Wellbandspalt 10 ein Wellband 12 mit reduzierter Steifigkeit an dem Außenring 11 des Wälzlagers 9 angeordnet ist. Das Wellband 12 ist dabei als dünnes Metallblech ausgebildet, das die Drehachse 1 der Welle umläuft und Wellen aufweist.

Weiter kann vorgesehen sein, ein Wellband als Verbund mindestens zweier aneinander befestigter Teil-Wellbänder auszubilden, wobei jedes der Teil-Wellbänder die Drehachse 1 umläuft, so dass der Verbund aus den Teil-Wellbändern eine gegenüber den beiden Teil-Wellbändern reduzierte Steifigkeit aufweist.

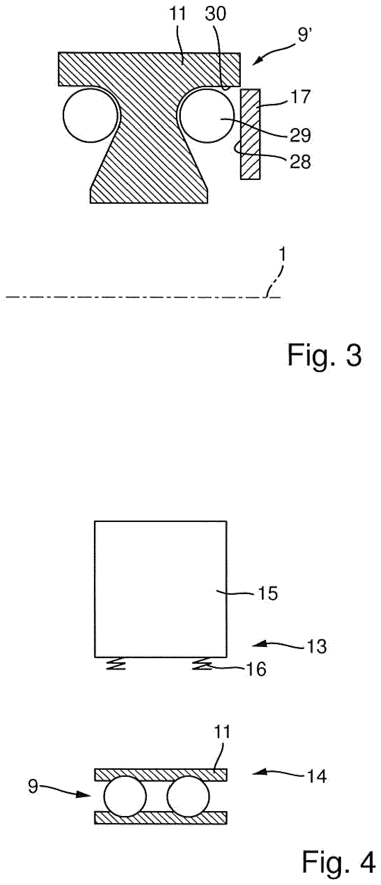

Fig. 4 zeigt eine Lageranordnung mit einer Welle sowie einem als Wälzlager 9 ausgebildeten Fanglager, wobei der Außenring 11 des Wälzlagers 9 an einem ersten Teil 14 einer Lageraufnahme 3 befestigt ist, wobei ein zweiter Teil 15 der Lageraufnahme 3 zwischen dem ersten Teil 14 der Lageraufnahme 3 und dem Gehäuse angeordnet ist, und wobei die beiden Teile 14, 15 der Lageraufnahme 3 in radialer Richtung federnd aneinander abgestützt sind. Insbesondere ist ein Federmittel 16 zwischen den beiden Teilen 14, 15 vorgesehen, das Kräfte in radialer Richtung aufnimmt und eine Übertragung der radialen Verschiebungen von dem ersten Teil 14 zu dem zweiten Teil 15 unterdrückt. Das zweite Teil 15 ist in dem ersten Teil 14 verschieblich gelagert, insbesondere übergreift das erste Teil 14 das zweite Teil 15 axial außenseitig, so dass axial wirkende Kräfte zwischen den beiden Teilen 14, 15 übertragen werden können.

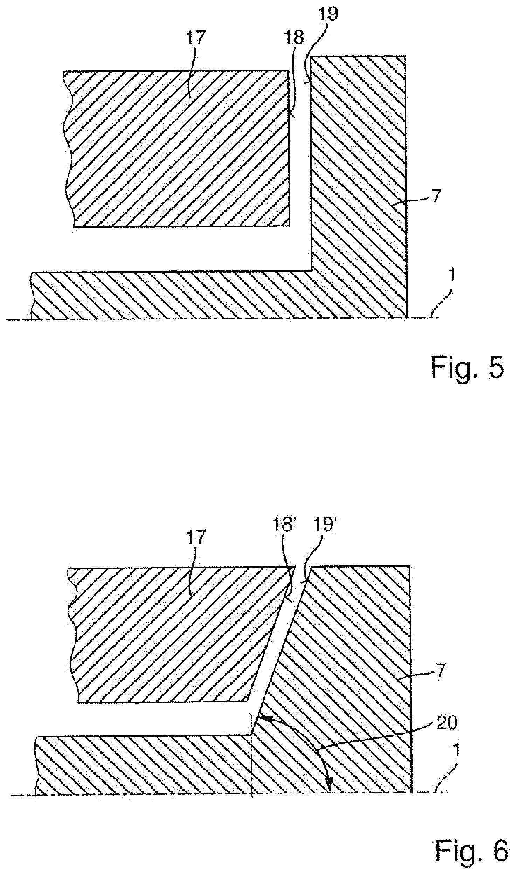

Fig. 5 zeigt ausschnittsweise einen Innenring 17 eines Fanglagers zur Aufnahme einer Welle 7, wobei zur Ausrichtung des Innenrings 17 bezüglich der Welle 7 eine Stirnfläche 18 des Innenrings 17 mit einer radial abgestellten Bordfläche 19 an der Welle 7 zusammenwirkt, um ein Führungsflächenpaar auszubilden.

Die Stirnfläche 18 des Innenrings 17 sowie die Bordfläche 19 an der Welle 7 bilden insbesondere auch einen Teil eines ersten Reibflächenpaares aus, das mit einem zweiten Reibflächenpaar, gebildet z. B. aus dem Außenring des Wälzlagers und einer Innenfläche einer Lageraufnahme, wobei die Reibeigenschaften der beiden Reibflächenpaare für eine reibgesteuerte Selbstzentrierung des Innenrings des Wälzlagers bezogen auf die Welle eingestellt sind. Insbesondere ist vorgesehen, dass an der Welle 7, auch im Bereich der Bordfläche 19, sowie an der Stirnfläche 18 des Innenrings 17 sowie an der Mantelfläche des Innenrings 17, die mit der Mantelfläche der Welle 7 in Kontakt kommt, eine Beschichtung oder ein Belag oder eine Oberflächenstrukturierung vorgesehen ist bzw. die Oberflächenrauhigkeit so eingestellt ist, dass die Reibeigenschaften des ersten Reibflächenpaars gegenüber den Reibeigenschaften des zweiten Reibflächenpaars erhöht sind. Weiter ist vorgesehen, dass die Reibeigenschaften des zweiten Reibflächenpaars durch Beschichtungen oder verminderte Oberflächenrauhigkeiten herabgesetzt sind. Die unterschiedlichen Reibeigenschaften der beiden Reibflächenpaare unterstützen eine Ausrichtung des Innenrings 17 relativ zu der Welle 7.

Fig. 6 zeigt ein bezogen auf Fig. 5 abgewandeltes Ausführungsbeispiel, bei dem vorgesehen ist, dass die Bordfläche 19' und die Stirnfläche 18' angeschrägt ausgebildet sind und ein Führungsflächenpaar ausbilden. Die Stirnfläche 18' sowie die Bordfläche 19' verlaufen parallel und schließen mit der Drehachse 1 einen hohen Winkel 20 ein. Aufgrund der angeschrägten Ausbildung wird der Innenring 17 in eine zentrierte Stellung gedrängt, wenn die Welle 7 mit der Bordfläche 19' in das Fanglager fällt.

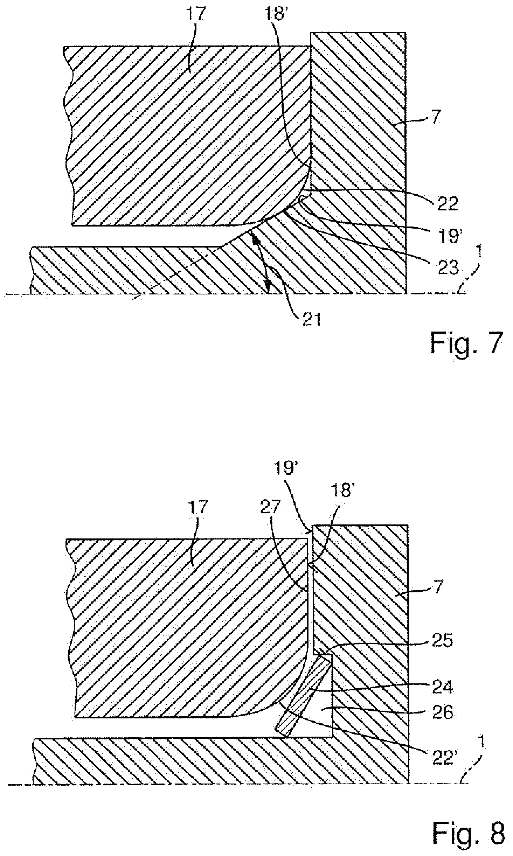

Fig. 7 zeigt ein gegenüber Fig. 5 und Fig. 6 wiederum abgewandeltes Ausführungsbeispiel. Es ist vorgesehen, dass die Bordfläche 19' abschnittsweise einen Winkel 21 zu der Drehachse 1 einschließt, und wobei die Stirnfläche 18' einen abgerundeten Abschnitt 22 aufweist, der mit dem angeschrägten Abschnitt der Bordfläche 19' zusammenwirkt.

Die Bordfläche 19' weist einen angeschrägten Abschnitt 23 auf, der an die Mantelfläche der Welle 7 angrenzt und der mit der Drehachse 1 einen Winkel einschließt. Der angeschrägte Abschnitt 23 der Bordfläche 19' wirkt mit einem abgerundeten Abschnitt 22 der Kontur der Stirnfläche 18' des Innenrings 17 zusammen, wobei der abgerundete Abschnitt 22 ein Kreisbogenprofil aufweisen kann.

Fig. 8 zeigt ein gegenüber den Ausführungsbeispielen aus Fig. 5, 6 und 7 erneut abgewandeltes Ausführungsbeispiel, wobei vorgesehen ist, dass ein Federelement 24 zwischen der Bordfläche 19' an der Welle 7 und der Stirnfläche 18' des Innenrings 17 angeordnet ist.

Die Bordfläche 19' ist im wesentlichen senkrecht zu der Drehachse 1 ausgerichtet und umfasst einen in axialer Richtung zurückweichenden Absatz 25, so dass ein Aufnahmeraum 26 für das Federelement 24 ausgebildet wird, das in dem dargestellten Ausführungsbeispiel als Tellerfeder ausgebildet ist.

Die Stirnfläche 18' des Innenrings 17 weist einen ersten, zu der Drehachse 1 im wesentlichen senkrechten Abschnitt 27 sowie einen abgerundeten Abschnitt 22' auf, der insbesondere ein Kreisbogenprofil aufweisen kann. Zwischen den abgerundeten Abschnitt 22', dem Absatz 25 an der Bordfläche 19' und der Mantelfläche der Welle 7 ist in dem Aufnahmeraum 26 das Federelement 24, nämlich die Tellerfeder, angeordnet, die im normalen Betriebszustand der Magnetlager entspannt ist und gespannt wird, wenn die Welle 7 in das Fanglager fällt, insbesondere, wenn die Welle 7 sich dem Innenring 17 des Fanglagers nähert. Das Federelement 24 spannt den Innenring 17 so, dass der Innenring 17 bezogen auf die Welle 7 eine günstige zentrierte Stellung einnehmen kann.

Fig. 3 zeigt ein Ausführungsbeispiel, bei dem vorgesehen ist, dass das als Fanglager vorgesehene Wälzlager 9' als im wesentlichen axial wirkendes Wälzlager ausgebildet ist, so dass die radiale Einstellung im Wälzkontakt stattfindet.

Das als Kugellager ausgebildete Wälzlager 9' nimmt Kräfte in radialer Richtung nur begrenzt auf und weist einen Druckwinkel auf, der mit der Drehachse einen geringen Winkel einschließt. Der Innenring des Kugellagers 9' ist als im wesentlichen ebene Scheibe ausgebildet und weist einen flache Innenring-Laufbahn 28 für die Kugeln 29 auf.

Dabei ist für den einen Lagerring, in dem Ausführungsbeispiel für den Außenring 11, vorgesehen, dass eine Umschlingung der Außenring-Laufbahn 30 der Wälzkörper, in diesem Fall der Kugeln 29, größer ist als an dem anderen Lagerring, in diesem Fall dem Innenring 17, des Wälzlagers.

Eine Außenring-Laufbahn 30 an dem Außenring 11 des Kugellagers 9' weist ein Profil auf, bei dem mit zunehmenden Abstand zu der Drehachse der Krümmungsradius zunimmt, so dass das Profil der Außenring-Laufbahn 30 auf der zu der Drehachse 1 abgekehrten Seite den Wälzkörper 29 radial abstützt und zu der Drehachse 1 annähernd parallel verläuft bzw. sich wieder hin zu der Drehachse 1 wendet. Aufgrund der der Wälzkörper 29 durch die Außenring-Laufbahn 30 werden auf die Wälzkörper 29 wirkende Fliehkräfte aufgenommen, so dass ein Käfig zur Führung der Wälzkörper 29 überflüssig ist und das Wälzlager 9' vollrollig ausgebildet ist. Der Innenring 17 weist keine Umschlingung der Innenring-Laufbahn 28 durch eine Ausformung an der von der Drehachse fort weisenden Seite auf und ist gegenüber dem Außenring 11 in radialer Richtung annähernd verschieblich, so dass das als Kugellager ausgebildete Wälzlager 9' nur Kräfte in axialer Richtung aufnehmen und übertragen kann.

Bei dem in Fig. 3 dargestellten dritten Ausführungsbeispiel war vorgesehen, dass zur Ausbildung der die Umschlingung ausbildendenden Ausformung an dem Außenring 11 bei dem Profil der Außenring-Laufbahn 30 der Krümmungsradius, also der Radius des Schmiegekreises in Bereich der Außenring-Laufbahn 30 bzw. unmittelbar an die Außenring-Laufbahn 30 angrenzend, mit zunehmenden Abstand von der Drehachse zunimmt.

Bei dem in Fig. 3 dargestellten dritten Ausführungsbeispiel war vorgesehen, dass die Umschlingung der Außenring-Laufbahn 30 eine Ausformung bildet. Es versteht sich, dass die Ausformung auch an dem Innenring 17 vorgesehen sein kann, und der Außenring 11 eine im wesentlichen ebene Laufbahn aufweist. Es versteht sich weiter, dass die durch die Umschlingung ausgebildete Ausformung an beiden Lagerringen 11, 17 vorgesehen sein kann.

### Bezugszeichenliste

- 1: Drehachse
- 2: Innenfläche
- 3: Lageraufnahme
- 4: Außenfläche
- 5: Nut
- 6: Nut
- 7: Welle
- 8: Gehäuse
- 9: Fanglager
- 10: Wellbandspalt
- 11: Außenring
- 12: Wellband
- 13: Vergleichs-Wellband
- 14: erstes Teil der Lageraufnahme 3
- 15: zweites Teil der Lageraufnahme 3
- 16: Federmittel
- 17: Innenring
- 18, 18': Stirnfläche
- 19, 19': Bordfläche
- 20: Winkel
- 21: Winkel
- 22, 22': abgerundeter Abschnitt
- 23: angeschrägter Abschnitt
- 24: Federelement
- 25: Absatz
- 26: Aufnahmeraum
- 27: senkrechter Abschnitt
- 28: Innenring-Laufbahn
- 29: Kugel
- 30: Außenring-Laufbahn

## Patentansprüche

1. Lageranordnung zur drehbaren Lagerung einer Welle (7) gegenüber einem Gehäuse (8), umfassend eine Welle (7), ein Gehäuse (8) und ein Fanglager (9), das als Wälzlager ausgebildet ist,
wobei das Wälzlager, welches einen Innenring (17) und Außenring (11) aufweist, Kräfte in axialer und radialer Richtung aufnehmen kann und insbesondere als Schrägrollenlager oder als zweireihiges Schrägkugellager, ausgebildet ist,
wobei das Wälzlager (9) in radialer Richtung im wesentlichen freigestellt ist,
**dadurch gekennzeichnet, dass** der Innenring (17) des Wälzlagers (9) mit der Welle (7) ein erstes Reibflächenpaar und der Außenring (11) des Wälzlagers mit einer Innenfläche (2) einer Lageraufnahme (3) des Gehäuses (8) mindestens mittelbar ein zweites Reibflächenpaar ausbildet, wobei die Reibeigenschaften der beiden Reibflächenpaare für eine reibgesteuerte Selbstzentrierung des Innenrings des Wälzlagers bezogen auf die Welle so eingestellt sind, dass die Reibeigenschaften des ersten Reibflächenpaares gegenüber der Reibeigenschaften des zweiten Reibflächenpaars erhöht sind.

2. Lageranordnung nach Anspruch 1, **dadurch gekennzeichnet, dass** die Reibung eines der Reibflächenpaare durch Beschichtungen, Beläge, Oberflächenrauhigkeiten bzw. Oberflächenstrukturierungen gegenüber den Reibeigenschaften des anderen Reibflächenpaars erhöht ist.

3. Lageranordnung nach Anspruch 2, **dadurch gekennzeichnet, dass** die Reibung des anderen Reibflächenpaars durch Beschichtungen oder verminderte Oberflächenrauhigkeiten herabgesetzt ist. -

4. Lageranordnung nach einem der Ansprüche 1 bis 3, **dadurch gekennzeichnet, dass** eine Stirnfläche (18) des Innenrings (17) des Wälzlagers (9) mit einer radial abgestellten Bordfläche (19) an der Welle (7) zusammenwirkt.

5. Lageranordnung nach Anspruch 4, **dadurch gekennzeichnet**, die Bordfläche (19') und die Stirnfläche (18') mindestens abschnittsweise angeschrägt ausgebildet sind und ein Führungsflächenpaar ausbilden.

6. Lageranordnung nach Anspruch 5, wobei die Bordfläche (19') und die Stirnfläche (18') einen Winkel (20), bezogen auf die Drehachse (1) der Welle (7), insbesondere einen hohen Winkel bezogen auf die Drehachse (1) einschließen.

7. Lagerung einer Welle eines Kompressors, umfassend eine Lageranordnung nach einem der Ansprüche 1 bis 6.

## Claims

1. Bearing arrangement for rotatably supporting a shaft (7) relative to a housing (8), comprising a shaft (7), a housing (8) and a back-up bearing (9) which is in the form of a roller bearing, wherein the roller bearing, which has an inner ring (17) and outer ring (11), can take up forces in an axial and radial direction and is in particular in the form of an angular roller bearing or of a two-row angular ball bearing,
wherein the roller bearing (9) is substantially free in a radial direction,
**characterized in that**
the inner ring (17) of the roller bearing (9) forms with the shaft (7) a first friction face pair and the outer ring (11) of the roller bearing forms with an inner face (2) of a bearing receiving member (3) of the housing (8) a second friction face pair at least indirectly, wherein the friction properties of the two friction face pairs are adjusted for a friction-controlled self-centering action of the inner ring of the roller bearing in relation to the shaft such that the friction properties of the first friction face pair are increased with respect to the friction properties of the second friction face pair.

2. Bearing arrangement according to Claim 1, **characterized in that** the friction of one of the friction face pairs is increased by means of coatings, linings, surface roughnesses or surface structures in relation to the friction properties of the other friction face pair.

3. Bearing arrangement according to Claim 2, **characterized in that** the friction of the other friction face pair is reduced by means of coatings or reduced surface roughnesses.

4. Bearing arrangement according to one of Claims 1 to 3, **characterized in that** an end face (18) of the inner ring (17) of the roller bearing (9) cooperates with a radially offset edge face (19) on the shaft (7).

5. Bearing arrangement according to Claim 4, **characterized in that** the edge face (19') and the end face (18') are formed so as to be at least partially inclined and form a guiding face pair.

6. Bearing arrangement according to Claim 5, wherein the edge face (19') and the end face (18') define an angle (20) relative to the rotation axis (1) of the shaft (7), in particular a high angle relative to the rotation axis (1).

7. Bearing of a shaft of a compressor, comprising a bearing arrangement according to one of Claims 1 to 6.

## Revendications

1. Ensemble de palier servant à monter un arbre (7) à rotation par rapport à un boîtier (8) et comprenant un arbre (7), un boîtier (8) et un palier de ventilateur (9) configuré comme palier de roulement,
le palier de roulement qui présente une bague intérieure (17) et une bague extérieure (11) pouvant reprendre des forces dans la direction axiale et la direction radiale et étant configuré en particulier comme palier de roulement oblique ou palier à deux rangées de billes obliques,
le palier de roulement (9) étant essentiellement libre dans la direction radiale,
**caractérisé en ce que**
la bague intérieure (17) du palier de roulement (9) forme avec l'arbre (7) une première paire de surfaces de frottement et la bague extérieure (11) du palier de roulement forme au moins indirectement avec une surface intérieure (2) d'un logement de palier (3) du boîtier (8) une deuxième paire de surfaces de frottement,
les propriétés de frottement des deux paires de surfaces de frottement étant ajustées en vue d'un auto-centrage, commandé par le frottement, de la bague intérieure du palier de roulement par rapport à l'arbre, en augmentant les propriétés de frottement de la première paire de surfaces de frottement par rapport aux propriétés de frottement de la deuxième paire de surfaces de frottement.

2. Ensemble de palier selon la revendication 1, **caractérisé en ce que** le frottement.de l'une des paires de surfaces de frottement est augmenté par rapport aux propriétés de frottement de l'autre paire de surfaces de frottement par des revêtements, des dépôts, une rugosité de surface ou une structuration de surface.

3. Ensemble de palier selon la revendication 2, **caractérisé en ce que** le frottement de l'autre paire de surfaces de frottement est diminué par des revêtements ou une diminution de la rugosité des surfaces.

4. Ensemble de palier selon l'une des revendications 1 à 3, **caractérisé en ce qu'**une surface frontale (18) de la bague intérieure (17) du palier de roulement (9) coopère avec une surface de bord (19), en retrait radial, de l'arbre (7).

5. Ensemble de palier selon la revendication 4, **caractérisé en ce qu'**au moins certaines parties de la surface de bord (19') et de la surface frontale (18') sont obliques et forment une paire de surfaces de guidage.

6. Ensemble de palier selon la revendication 5, dans lequel la surface de bord (19') et la surface frontale (18') forment un angle (20) par rapport à l'axe de rotation (1) de l'arbre (7) et en particulier un grand angle par rapport à l'axe de rotation (1).

7. Montage de l'arbre d'un compresseur comprenant un ensemble de palier selon l'une des revendications 1 à 6.
